# FASCICULE DE BREVET EUROPEEN

(11) **EP 1 064 842 B1**
(45) Date de publication et mention de la délivrance du brevet: **03.09.2003**
(21) Numéro de dépôt: 00460039.1
(22) Date de dépôt: 30.06.2000
(51) Int. Cl.: A01K 1/02, A01K 1/015

(54) **Case de maternité**
Abferkelbucht
Farrowing crate

(30) Priorité: 01.07.1999 FR 9908747
(43) Date de publication de la demande: 03.01.2001
(73) Titulaire: GALVELPOR SA, 29429 Landerneau (FR)
(72) Inventeur: Alonso, Philippe, 29419 Landerneau (FR); Guedes, Yves, 29419 Landerneau (FR); Le Gall, Pascal, 29419 Landerneau (FR)
(74) Mandataire: Maillet, Alain

(56) Documents cités:
- EP-A- 0 841 004
- DE-U- 9 203 466
- US-A- 4 294 195
- "GALVELPOR,FR,LANDERNEAU" GALVELPOR,FR,LANDERNEAU, XP002078415

## Description

La présente invention concerne une case de maternité destinée à recevoir une femelle et ses petits, et une plaque de chauffage destinée à équiper le sol de ladite case. L'invention s'applique notamment à une case de maternité destinée à recevoir une truie et ses porcelets.

Les cases de maternité connues pour une truie et ses porcelets comportent usuellement un plancher destiné à recevoir la truie et, de part et d'autre de celui-ci, un plancher destiné à recevoir les porcelets.

D'une manière générale, le plancher pour porcelets est constitué d'un caillebotis en matériau plastique, alors que le plancher de truie est constitué d'un caillebotis métallique.

Cette différence de matériau entre lesdits caillebotis est destinée à inciter les porcelets à demeurer sur le caillebotis qui leur est réservé, du fait de la sensation de confort relatif que leur procure le contact d'un matériau plastique, à la différence d'un matériau métallique.

De plus, le plancher pour porcelets comporte d'ordinaire une zone chauffée, connue sous le nom de "nid à porcelets", laquelle est généralement constituée d'une plaque chauffante prévue pour recevoir les porcelets nouveaux-nés qui ont un besoin important de chaleur pour survivre. Le chauffage peut également être apporté par une lampe de chauffage appropriée.

Ce nid est particulièrement important pour le porcelet pendant ses premiers jours de vie lorsque la chaleur est un élément prédominant pour sa survie.

Il est donc très important que les porcelets y aillent le plus tôt possible après leur naissance.

Par ailleurs, les porcelets ont une tendance naturelle à rester le long des tétines de la truie car les mamelles de cette dernière dégagent également de la chaleur. De ce fait, le porcelet nouveau-né délaisse régulièrement la source de chaleur du nid au bénéfice d'une mamelle de la truie, et ce d'autant plus facilement que le nid est généralement souvent trop éloigné pour les porcelets des mamelles de la truie.

Dans les cases de maternité de l'art antérieur, la truie est souvent maintenue en position au-dessus de la zone qui lui est destinée grâce à une cage de contention prévue à cet effet. Cette cage lui sert aussi de maintien lorsqu'elle donne son lait aux porcelets. La truie est alors couchée, le dos en appui contre l'un des côtés de la cage et les pattes étalées sur le sol destiné primitivement aux porcelets.

Les systèmes de l'art antérieur présentent les inconvénients suivants. En effet, on a pu constater que la surface plane du sol ne procure pas de maintien aux pattes arrières des porcelets lors des tétées.

Par ailleurs, lorsque les porcelets nouveau-nés sont sur une zone perforée, ils piétinent et ne trouvent pas l'appui nécessaire pour caler leurs pattes arrière lors des tétées. De plus, les fentes des caillebotis peuvent occasionner des blessures à ces pattes.

Lorsque les porcelets nouveau-nés sont sur une zone pleine, leurs pattes arrière glissent et ils ne trouvent pas d'arrêtoirs suffisants pour stopper un tel élan.

Enfin, lorsque la truie est allongée et qu'elle veut se redresser ou se relever, ses pattes n'ont aucun appui. L'animal doit se mouvoir fortement pour ramener ses pattes puis se lever. Ceci au risque de blesser un porcelet.

Le but de la présente invention est de proposer une case de maternité et une plaque de chauffage destinée à équiper le sol de ladite case qui ne présentent pas les inconvénients mentionnés ci-dessus.

A cet effet, une case de maternité selon l'invention est telle que ladite ou chaque plaque chauffante qui l'équipe comporte, sur sa partie supérieure, des stries longitudinales prévues pour former un appui longitudinal qui peut être utilisé, d'une part, pour la truie pour qu'elle puisse se redresser facilement et, d'autre part, pour les pattes arrière des porcelets lors des tétées. Avantageusement, lesdites stries longitudinales présentent une forme en dents de scie, avec, pour chacune d'elles, un flan quasi-vertical et un flan à pente inclinée.

De plus, avantageusement, à l'intérieur de chaque strie longitudinale, sont prévus des arrêtoirs transversaux pour constituer des appuis latéraux aux pattes arrière des petits.

Chaque portion entre deux stries longitudinales consécutives est traversée par un élément chauffant, tel qu'une canalisation dans laquelle peut circuler de l'eau chaude ou une résistance électrique.

Avantageusement, ladite ou chaque plaque chauffante présente une forme rectangulaire allongée avec des petits côtés tronqués.

La présente invention concerne également une plaque chauffante qui est destinée à équiper une case de maternité telle qu'il vient d'être décrit.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est une vue de dessus d'une case de maternité équipée de plaques chauffantes selon la présente invention,
La Fig. 2 est une vue en perspective d'une plaque chauffante selon la présente invention, et
La Fig. 3 est une vue en coupe selon le plan III/III de la Fig. 2 d'une plaque chauffante selon la présente invention.

Une case de maternité 1 selon la présente invention présente par exemple une forme rectangulaire, qui lui confère une extrémité avant 2, une extrémité arrière 3, et des bords latéraux 4 et 5.

Dans cet exemple de réalisation, l'un des bords latéraux 5 est matérialisé par un mur ou une cloison 6, alors que l'autre bord 4 et lesdites extrémités 2 et 3 sont respectivement matérialisés par des éléments de barrière 7, 8 et 9.

La case 1 comporte un plancher 10 qui est destiné à recevoir une truie et un plancher 11 qui est destiné à recevoir des porcelets.

Le plancher de truie 10 est délimité dans une direction transversale par deux longerons 13 qui sont par exemple parallèles entre eux. Ledit plancher 10 est également délimité, dans une direction longitudinale, par ladite extrémité avant 2 et par ladite extrémité arrière 3.

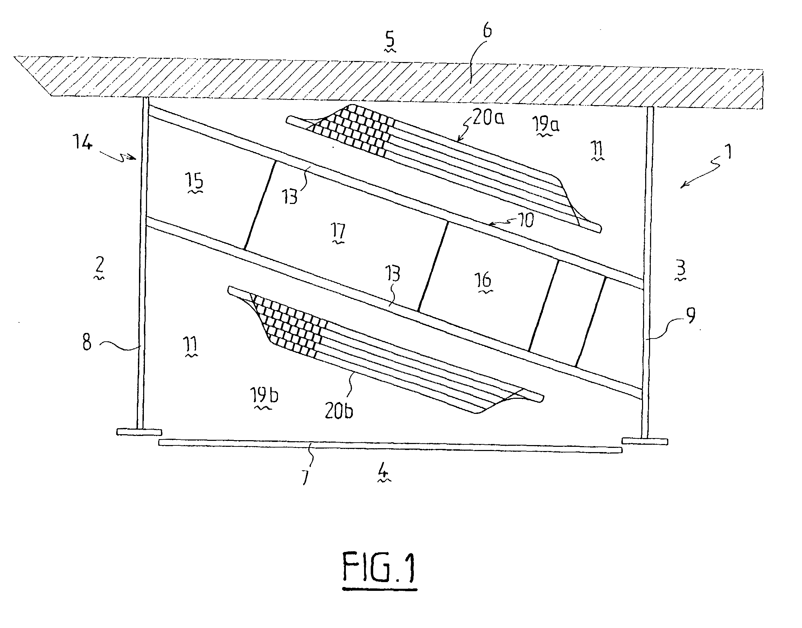

Le plancher de truie 10 comporte par exemple un caillebotis avant 15 qui est monté entre les longerons 13, à partir de l'extrémité avant 2 de la case 1. Dans l'exemple de la Fig. 1, ce plancher 10 comporte également un caillebotis arrière 16 qui est monté entre lesdits longerons 13 et à partir dudit couloir transversal 14.

Le plancher de truie 10 comporte également, entre lesdits longerons 13, un gisoir 17 qui est destiné à recevoir un flanc de la truie et qui relie entre eux lesdits caillebotis avant et arrière 15 et 16.

Dans l'exemple de la Fig. 1, le plancher pour porcelets 11 comporte deux caillebotis 19a et 19b qui sont chacun montés, d'une part, entre l'un des longerons 13 et, d'autre part, entre l'extrémité 2 de la case 1, ledit couloir transversal 14 et ledit bord latéral 4 ou 5 qui sont en regard dudit longeron 13. Cependant, on pourrait prévoir un seul caillebotis 19 pour ledit plancher 11, dans le cas où l'un des longerons 13 serait sensiblement confondu avec un bord latéral 4 ou 5 de la case 1.

De préférence, on notera que le plancher de truie 10 présente une structure métallique alors que les caillebotis 19a et 19b du plancher pour porcelets 11 sont constitués d'un matériau plastique plus confortable pour lesdits porcelets, de sorte à les dissuader de séjourner trop longtemps à proximité immédiate de la truie et à minimiser ainsi le risque de leur écrasement.

Chaque caillebotis 19a et 19b du plancher pour porcelets 11 comporte une plaque fixe chauffante 20a, 20b qui est destinée à être utilisée pendant les premiers jours d'allaitement qui suivent la naissance d'une portée de porcelets, par exemple pendant environ cinq jours.

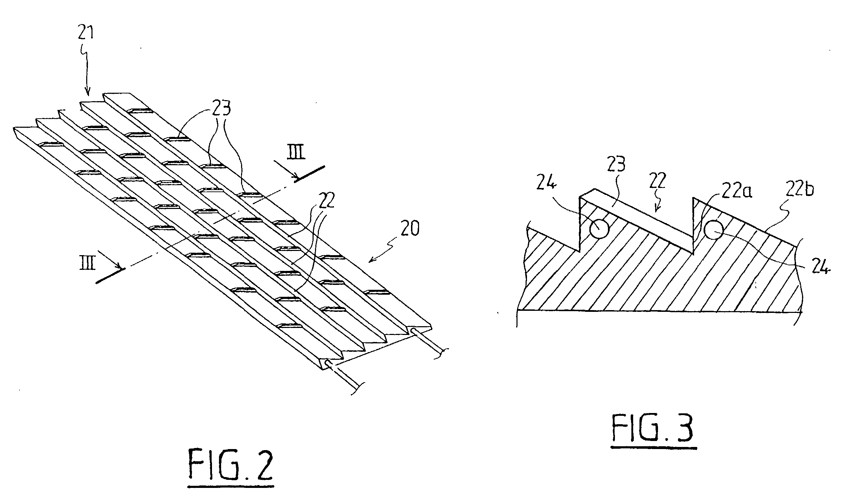

Selon une caractéristique essentielle de l'invention, chaque plaque chauffante présente la structure qui est celle représentée à la Fig. 2. Elle présente une forme sensiblement rectangulaire allongée et plane avec sa surface supérieure 21 qui présente des stries longitudinales par exemple en dents de scie ou, en d'autres termes, de section triangulaire avec un flan 22a quasi-vertical et un flan à pente inclinée 22b (voir la Fig. 3). Les stries longitudinales 22 s'étendent de manière continue sur toute la longueur de la plaque chauffante. Chaque strie longitudinale 22 est prévue pour former un appui longitudinal qui peut être utilisé, d'une part, pour la truie pour qu'elle puisse se redresser facilement et, d'autre part, pour les pattes arrière des porcelets lors des tétées.

A l'intérieur de chaque strie longitudinale 22, par exemple en saillie sur chaque flan incliné 22b de la surface supérieure 21, sont prévus des arrêtoirs transversaux 23, par exemple régulièrement espacés le long du flan 22b. Ces arrêtoirs 23 constituent des appuis latéraux aux pattes arrière des porcelets lors des tétées. Ils ont également pour effet de maintenir les pattes arrière des porcelets lorsqu'ils ont des problèmes de tenue sur leurs pattes (notamment dans le cas de porcelets dit de type "splay leg")

On remarquera que les arrêtoirs 23 sur un flan 22b sont disposés, par exemple, en quinconce par rapport aux arrêtoirs 23 d'un autre flan 22b contigu.

Chaque portion entre deux stries longitudinales 22 consécutives, par exemple entre un flan vertical 22a d'une strie et le flan incliné 22b d'une autre strie, est chauffée au moyen d'éléments chauffants 24 courant au voisinage du sommet de ces portions. Par exemple, ces éléments chauffants 24 sont des canalisations 24 dans lesquelles circule de l'eau chaude. Il pourrait également s'agir de résistances électriques.

Chaque plaque chauffante 20a, 20b est disposée sur le caillebotis 19a, 19b correspondant de manière parallèle au longeron 13 délimitant le sol prévu pour la truie et à distance de quelques centimètres de celui-ci. Par ailleurs, leur longueur dépend de l'étendue des tétines de la truie et des pattes de l'animal auquel ladite case 1 s'adresse.

On notera que la forme générale, vue de dessus, des plaques chauffantes 20 selon l'invention pourraient être rectangulaires, mais, comme cela est représenté à la Fig. 1, elles peuvent également avoir leurs côtés latéraux tronqués de manière à présenter une forme qui rappelle celle des bicornes.

## Revendications

1. Case de maternité (1) destinée à recevoir une femelle et ses petits, notamment une truie et ses porcelets, ladite case (1) comportant un plancher dont une première partie (10) et une seconde partie (11) sont respectivement prévues pour recevoir ladite femelle et lesdits petits, ladite seconde partie (11) comportant au moins une plaque chauffante (20), **caractérisée en ce que** ladite ou chaque plaque chauffante (20) comporte, sur sa partie supérieure, des stries longitudinales (22) s'étendant de manière continue sur toute la longueur de la plaque chauffante (20) et qui sont prévues pour former un appui longitudinal qui peut être utilisé, d'une part, pour la truie pour qu'elle puisse se redresser facilement et, d'autre part, pour les pattes arrière des porcelets lors des tétées.

2. Case de maternité (1) selon la revendication 1, **caractérisée en ce que** lesdites stries longitudinales (22) présentent une forme en dents de scie, avec, pour chacune d'elles, un flan quasi-vertical (22a) et un flan à pente inclinée (22b).

3. Case de maternité (1) selon la revendication 1 ou 2, **caractérisée en ce qu'**à l'intérieur de chaque strie longitudinale (22), sont prévus des arrêtoirs transversaux (23) pour constituer des appuis latéraux aux pattes arrière des petits.

4. Case de maternité (1) selon une des revendications précédentes, **caractérisée en ce que** chaque portion entre deux stries longitudinales (22) consécutives est traversée par un élément chauffant (24), tel qu'une canalisation dans laquelle peut circuler de l'eau chaude ou une résistance électrique.

5. Case de maternité (1) selon une des revendications précédentes, **caractérisée en ce que** ladite ou chaque plaque chauffante (20) présente une forme rectangulaire allongée avec des petits côtés tronqués.

6. Plaque chauffante destinée à être montée sur le plancher (10) d'une case de maternité (1) pour une femelle et ses petits, notamment une truie et ses porcelets, **caractérisée en ce qu'**elle comporte, sur sa partie supérieure, des stries longitudinales (22) s'étendant de manière continue sur toute la longueur de la plaque chauffante (20) et qui sont prévues pour former un appui longitudinal qui peut être utilisé, d'une part, pour la truie pour qu'elle puisse se redresser facilement et, d'autre part, pour les pattes arrière des porcelets lors des tétées.

7. Plaque chauffante selon la revendication 6, **caractérisée en ce que** lesdites stries longitudinales (22) présentent une forme en dents de scie, avec, pour chacune d'elles, un flan quasi-vertical (22a) et un flan à pente inclinée (22b).

8. Plaque chauffante selon la revendication 6 ou 7, **caractérisée en ce qu'**à l'intérieur de chaque strie longitudinale (22), sont prévus des arrêtoirs transversaux (23) pour constituer des appuis latéraux aux pattes arrière des petits.

9. Plaque chauffante selon une des revendications 6 à 8, **caractérisée en ce que** chaque portion entre deux stries longitudinales (22) consécutives est traversée par un élément chauffant (24), tel qu'une canalisation dans laquelle peut circuler de l'eau chaude ou une résistance électrique.

10. Plaque chauffante selon une des revendications 6 à 9, **caractérisée en ce qu'**elle présente une forme allongée rectangulaire avec ses petits côtés tronqués.

## Patentansprüche

1. Abferkelbucht (1), die dazu bestimmt ist, ein Weibchen und seine Kleinen, insbesondere ein Mutterschwein und seine Ferkel, aufzunehmen, wobei die Bucht (1) einen Boden umfasst, dessen erster Teil (10) und zweiter. Teil (11) jeweils dazu vorgesehen sind, das Weibchen und die Kleinen aufzunehmen, wobei der zweite Teil (11) mindestens eine Heizplatte (20) umfasst, **dadurch gekennzeichnet, daß** die bzw. jede Heizplatte (20) an ihrem oberen Teil Längsrillen (22) umfasst, die sich kontinuierlich über die gesamte Länge der Heizplatte (20) erstrecken und dazu vorgesehen sind, eine Längsabstützung zu bilden, die einerseits für das Mutterschwein, damit es sich leicht aufrichten kann, und andererseits für die Hinterpfoten der Ferkel beim Saugen verwendet werden kann.

2. Abferkelbucht (1) nach Anspruch 1, **dadurch gekennzeichnet, daß** die Längsrillen (22) eine Form von Sägezähnen aufweisen, wobei jede von ihnen einen gleichsam vertikalen Zuschnitt (22a) und einen Zuschnitt mit geneigtem Gefälle (22b) aufweist.

3. Abferkelbucht (1) nach Anspruch 1 oder 2, **dadurch gekennzeichnet, daß** innerhalb jeder Längsrille (22) Querfeststeller (23) vorgesehen sind, um seitliche Abstützungen für die Hinterpfoten der Kleinen zu bilden.

4. Abferkelbucht (1) nach einem der vorhergehenden Ansprüche, **dadurch gekennzeichnet, daß** jeder Abschnitt zwischen zwei aufeinanderfolgenden Längsrillen (22) von einem Heizelement (24), wie beispielsweise einer Kanalisation, durchquert wird, in der heißes Wasser oder ein elektrischer Widerstand zirkulieren kann.

5. Abferkelbucht (1) nach einem der vorhergehenden Ansprüche, **dadurch gekennzeichnet, daß** die bzw. jede Heizplatte (20) eine längsförmige rechteckige Form mit abgestumpften kurzen Seiten aufweist.

6. Heizplatte, die dazu bestimmt ist, auf dem Boden (10) einer Abferkelbucht (1) für ein Weibchen und seine Kleinen, insbesondere ein Mutterschwein und seine Ferkel, befestigt zu werden, **dadurch gekennzeichnet, daß** sie auf ihrem oberen Teil Längsrillen (22) umfasst, die sich kontinuierlich über die gesamte Länge der Heizplatte (20) erstrecken und dazu vorgesehen sind, eine Längsabstützung zu bilden, die einerseits für das Mutterschwein, damit es sich leicht aufrichten kann, und andererseits für die Hinterpfoten der Ferkel beim Saugen verwendet werden kann.

7. Heizplatte nach Anspruch 6, **dadurch gekennzeichnet, daß** die Längsrillen (22) eine Form von Sägezähnen aufweisen, wobei jede von ihnen einen gleichsam vertikalen Zuschnitt (22a) und einen Zuschnitt mit geneigtem Gefälle (22b) aufweist.

8. Heizplatte nach Anspruch 6 oder 7, **dadurch gekennzeichnet, daß** innerhalb jeder Längsrille (22) Querfeststellungen (23) vorgesehen sind, um seitliche Abstützungen für die Hinterpfoten der Kleinen zu bilden.

9. Heizplatte nach einem der Ansprüche 6 bis 8, **dadurch gekennzeichnet, daß** jeder Abschnitt zwischen zwei aufeinanderfolgenden Längsrillen (22) von einem Heizelement (24), wie beispielsweise einer Kanalisation durchquert wird, in der heißes Wasser oder ein elektrischer Widerstand zirkulieren kann.

10. Heizplatte nach einem der Ansprüche 6 bis 9, **dadurch gekennzeichnet, daß** sie eine längsförmige rechteckige Form mit abgestumpften kurzen Seiten aufweist.

## Claims

1. Maternity box (1) intended to accommodate a female and her offspring, in particular a sow and her piglets, the said box (1) including a floor with a first part (10) and a second part (11) respectively provided to accommodate the said female and the said offspring, the said second part (11) including at least one heating plate (20), **characterised in that** the said or each heating plate (20) includes, on its upper part, longitudinal grooves (22) extending continuously along the entire length of the heating plate (20) and intended to form a longitudinal support which may be used, on the one hand, for the sow to be able to stand up easily and, on the other hand, for the hind feet of the piglets when feeding.

2. Maternity box (1) according to Claim 1, **characterised in that** the said longitudinal grooves (22) look like sawteeth each having a quasi-vertical blank (22a) and a blank with an inclined slope (22b).

3. Maternity box (1) according to Claim 1 or 2, **characterised in that**, inside each longitudinal groove (22), there are transverse stops (23) to form lateral supports for the hind feet of the offspring.

4. Maternity box (1) according to one of the preceding claims, **characterised in that** each section between two consecutive longitudinal grooves (22) is crossed by a heating element (24), such as a pipe in which hot water or an electrical resistor can circulate.

5. Maternity box (1) according to one of the preceding claims, **characterised in that** the said or each heating plate (20) has an elongated rectangular shape with small sides truncated.

6. Heating plate intended to be fitted to the floor (10) of a maternity box (1) for a female and her offspring, in particular a sow and her piglets, **characterised in that** it includes, on its upper part, longitudinal grooves (22) extending continuously along the entire length of the heating plate (20) and intended to form a longitudinal support which may be used, on the one hand, for the sow to be able to stand up easily and, on the other hand, for the hind feet of the piglets when feeding.

7. Heating plate according to Claim 6, **characterised in that** the said longitudinal grooves (22) look like sawteeth each with a quasi-vertical blank (22a) and a blank with an inclined slope (22b).

8. Heating plate according to Claim 6 or 7, **characterised in that**, inside each longitudinal groove (22), there are transverse stops (23) to form lateral supports for the hind feet of the offspring.

9. Heating plate according to one of Claims 6 to 8, **characterised in that** each section between two consecutive longitudinal grooves (22) is crossed by a heating element (24), such as a pipe in which hot water or an electrical resistor can circulate.

10. Heating plate according to one of Claims 6 to 9, **characterised in that** it has an elongated rectangular shape with its small sides truncated.
